# EUROPÄISCHE PATENTSCHRIFT

(11) **EP 2 428 470 B1**
(45) Veröffentlichungstag und Bekanntmachung des Hinweises auf die Patenterteilung: **13.03.2013**
(21) Anmeldenummer: 11176568.1
(22) Anmeldetag: 04.08.2011
(51) Int. Cl.: B65G 23/18, B65G 47/51

(54) **Fördersystem**
Conveying system
Convoyeur

(30) Priorität: 08.09.2010 DE 102010040413; 08.09.2010 DE 102010040410
(43) Veröffentlichungstag der Anmeldung: 14.03.2012
(73) Patentinhaber: Krones AG, 93073 Neutraubling (DE)
(72) Erfinder: Wahl, Matthias, 84085 Langquaid (DE); Seger, Martin, 92318 Neumarkt i.d.Opf. (DE); Hüttner, Johann, 84066 Mallersdorf-Pfaffenberg (DE)
(74) Vertreter: Grünecker, Kinkeldey, Stockmair & Schwanhäusser

(56) Entgegenhaltungen:
- EP-A1- 0 442 200
- EP-A1- 1 849 725
- WO-A1-2010/005300
- US-A- 4 054 202

## Beschreibung

Die Erfindung betrifft ein Fördersystem gemäß Oberbegriff des Patentanspruchs 1.

In Flaschenbehandlungsmaschinen ist zum Transportieren der Flaschen, bspw. PET-Flaschen, zwischen verschiedenen Stationen ein Fördersystem vorgesehen. In dem Fördersystem können mehrere Förderwege vorgesehen sein, zwischen denen die Flaschen zum Verteilen oder Sortieren zu transferieren sind. Alternativ oder additiv kann in das Fördersystem ein Speicher variabler Kapazität eingegliedert sein, der bei Ausfall oder Störung einer Station angelieferte und nicht mit derselben Rate angenommene Flaschen zwischenspeichert, oder bei schnellerer Abnahmerate genügend zwischengespeicherte Flaschen liefert, um einen Zeitpuffer zu schaffen, innerhalb dessen im Idealfall die Störung beseitigt wird, so dass die Flaschenbehandlungsmaschine kontinuierlich betreibbar ist. In beiden Fällen ist es Standard, die Flaschenträger-Kette gleichzeitig als Zugelement zu benutzen, auf das die Förderbewegung aufgebracht wird. Für einen Spurwechsel zwischen unterschiedlichen Förderwegen jeweils mit einer Flaschenkette ist es erforderlich, Flaschen von einer Flaschenträger-Kette abzunehmen und auf die andere Flaschenträger-Kette zu transferieren. Hierbei sind gleich viele Zugelemente und Flaschenträger-Ketten erforderlich. Aufgrund der zweifachen Aufgabe als Zugelemente benutzter Flaschenträger-Ketten, nämlich der lasttragenden Funktion und der antreibenden Funktion, sind solche Flaschenträger-Ketten aufwändig, teuer und schadensanfällig. Im zweiten Fall eines Speichers mit der die Antriebsfunktion und die Lasttragefunktion erfüllenden Flaschenträger-Kette ist es erforderlich, die Flaschenträger-Kette beim Umlenken aus einer Führung zu lösen und in eine andere einzuführen. Außerdem muss die die Antriebsbewegung entlang der Führungen und die Lasttragefunktion erfüllende Flaschenträger-Kette z.B. als Endlosschlaufe eine sehr große Länge aufweisen.

Aus DE 10 2004 053 663 A ist ein Fördersystem einer Flaschenbehandlungsmaschine bekannt, bei dem im als Speicherturm ausgebildeten Speicher zwei benachbarte Führungen wendelförmig verlaufen, in denen zumindest ein Teilabschnitt einer endlosen Flaschenträger-Kette geführt und angetrieben wird, und an denen ein Schlitten mit zwei Transferführungen verfahrbar ist, um die Kapazität des Speichers bedarfsabhängig variieren zu können. Die Flaschenträger-Kette wird direkt angetrieben, ist eine Spezialgliederkette und trägt oberseitig plattenförmige Flaschenträger oder Flaschengreifer. Im Transferbereich wird die Flaschenträgerkette mit mechanischen Hilfsmitteln der Transferführung aus einer Führung gelöst, in der Transferführung geführt und umgelenkt, und mit mechanischen Hilfsmitteln wieder in die andere Führung eingebracht. Daraus resultieren erhebliche Belastungen, für die Flaschenträger-Kette, die auch wegen der beträchtlichen Last stabil und schwer ist, und eine relativ hohe Antriebsleistung erfordert, die die Flaschenträger-Kette wiederum unter erhebliche lokale Zugspannungen setzen kann. Es kann beispielsweise auch reibschlüssiger Kontakt zwischen den Flaschen, den Führungen und dgl. entstehen, der zu Verschmutzung und Verschleiß der Flaschen führt.

Aus EP 0 581 143 B ist ein Fördersystem einer Zigaretten-Behandlungsmaschine bekannt, in welchem entweder ein einziges kettenartiges Förderelement gleichzeitig zur Einleitung der Antriebsbewegung und zum Tragen der Last verwendet wird, oder in zwei getrennten Führungen jeweils ein lasttragendes Förderelement eigenständig angetrieben wird. In das Fördersystem ist ein Speicher variabler Kapazität eingegliedert, der zumindest eine Transferführung zum Umlenken des Förderstroms von einer Führung auf die andere Führung aufweist. Im Falle nur eines einzigen endlosen Förderelementes wird dieses im Transferbereich aus einer Führung gelöst, transferiert und in die andere Führung wieder eingesetzt. Im zweiten Fall mit den beiden, unabhängig voneinander antreibbaren Förderelementen in den zwei Führungen ist die Transferführung als brückenförmiges Förderelement ausgebildet, das den Zigarettenstrom von einem Förderelement abnimmt, transferiert und auf das andere Förderelement aufbringt.

Aus EP 1 161 391 B ist ein Güter-Fördersystem mit einem Speicher variabler Kapazität bekannt, in welchem zwei die Last tragende Gutträger-Ketten in zwei nebeneinander laufenden Führungen geführt und angetrieben werden. Im Transferbereich ist eine drehbare Förderscheibe zwischen den Führungen und diesen entlang beweglich angeordnet, die von beiden Gutträger-Ketten drehangetrieben wird, um Güter aufzunehmen, zu transferieren und von einer auf die andere Gutträger-Kette umzuladen.

Aus EP 1 232 974 B ist ein Fördersystem mit einem im Wesentlichen geradlinigen Förderweg für gleichartige oder ähnliche Gegenstände bekannt, die bei der Stückgutverarbeitung in mehreren Verarbeitungsschritten behandelt werden. Entlang des Förderwegs ist eine Führung für eine lasttragende Gutträger-Kette vorgesehen. Beiderseits der Führung sind Zahnriementriebe oder Antriebsräder angeordnet, die mit einer der gewünschten Fördergeschwindigkeit entsprechenden Umlaufgeschwindigkeit angetrieben werden, und diese auf die Gutträger-Kette übertragen. Die Übertragung der Antriebsgeschwindigkeit erfolgt magnetschlüssig, wofür die Riementriebe oder Antriebsscheiben Permanentmagneten tragen, und an den Gutträgern der Gutträger-Kette Ankerteile oder Gegen-Magneten angeordnet sind.

Der Erfindung liegt die Aufgabe zugrunde, ein Fördersystem der eingangsgenannten Art anzugeben, das betriebssicher, universell variabel betreibbar ist, im Betrieb nur moderaten Kräften und Spannungen unterworfen wird, und bei dem in einem Transferbereich kein Verschleiß und keine Verschmutzung der Flaschen auftreten. Das Fördersystem soll sich bevorzugt in einem Speicher durch eine kostengünstige und leichte Ausbildung sowie einen verschleißarmen und störungsunanfälligen Betrieb auszeichnen.

Die gestellte Aufgabe wird mit den Merkmalen des Patentanspruchs 1 gelöst.

Durch die Trennung der Funktion der Aufnahme und Übertragung der Antriebsgeschwindigkeit und die Funktion des Lasttragens und Förderns der Flaschen hat jedes durchgehende Zugelement ausschließlich treibende Funktion, ohne nennenswerte Traglasten aufnehmen oder abstützen zu müssen. Es ist ein Antrieb des Zugelements durch einen oder mehrere Motoren möglich, die, vorzugsweise, dicht hintereinander angeordnet sein können, so dass die im Zugelement wirksame Zugkraft auf einem niedrigen Niveau gehalten werden kann. Das Zugelement kann deshalb relativ filigran und leicht ausgebildet sein, wodurch auch sein Bewegungswiderstand gering bleibt, und nur geringe Massen zu bewegen sind. Da die Flaschenträger-Kette nur die lasttragende und die fördernde Funktion hat und Flaschen im Transferbereich und entlang der Führungen fördert, lässt sie sich aus einfachen kurvengängig gekoppelten Flaschenträgern zusammensetzen, die die Traglast auf Abstützungen ableiten, ohne damit das Zugelement zu belasten. Die Kupplungen übertragen die Zugkräfte schlupffrei und verteilen diese entlang der Überdeckungslänge zwischen der Führung und dem Trum der Flaschenträger-Kette gleichmäßig, so dass die Flaschenträger-Kette wie auch das Zugelement nur geringen lokalen Zugspannungen unterworfen werden, was eine leichte und kostengünstige Ausbildung der Flaschenträger-Kette ermöglicht. Im Transferbereich ist weder ein gesonderter Transfer nur der Flaschen erforderlich, noch brauchen komplizierte oder verschleißanfällige Schaltglieder an den Zugelementen mechanisch aus- und eingekoppelt zu werden. Die Kupplungen wirken nur mit Magnetschluss, nur mit Formschluss oder mit kombiniertem Magnet- und Formschluss und werden selbsttätig gelöst bzw. eingerückt, wenn sich die Flaschenträger-Kette von einem Zugelement entfernt oder dem anderen Zugelement nähert. Die Führungen der angetriebenen Zugelemente können einfach ausgebildet werden. Dank der Kupplungen wird durch die verteilten Kupplungskräfte eine wirksame Stabilisierung der Flaschenträger-Kette erzielt. Zwischen dem Zugelement und den Flaschen entsteht kein Verschleiß und werden keine Verschmutzungen übertragen. Der bewusst hergestellte Kontakt zwischen der Flaschenträger-Kette und dem Zugelement stützt die Flaschenträger-Kette in diesem Trum stabil an dem geführten Zugelement ab, so dass der Führungsaufwand für die Flaschenträger-Kette reduziert werden kann, z.B. eine nur die Last tragende einfache Abstützung ausreicht. Die Flaschenträger-Kette nutzt somit die Führung des Zugelementes, von dem es angetrieben wird, wobei der Kupplungsschluss bei der Führung mitwirkt. Gegebenenfalls benötigt die Flaschenträger-Kette sogar keine lasttragende Abstützung.

Bei einer zweckmäßigen Ausführungsform wird jede Kupplung durch eine von der Transferführung erzwungene Relativbewegung zumindest eines Flaschenträgers gegenüber dem Zugelement gelöst und eingerückt. Die exakt vorherbestimmbare und unter den Kupplungen weitgehend gleichbleibende Schlusskraft lässt nach einer geringen Relativbewegung degressiv nach bzw. stellt sich mit einer geringen abschließenden Relativbewegung progressiv sofort ein. Dies bedeutet, dass allenfalls nur am Anfang und am Ende eines Transfers nennenswerte Kräfte zwischen der Transferführung und den Flaschenträgern zu übertragen sind, um die Kupplung zu lösen bzw. einrücken zulassen. Das Lösen und Einrücken der Kupplungen erfolgt sanft, so dass die Flaschen keinen nennenswerten Vibrationen ausgesetzt werden.

Die Erfindung ist besonders zweckmäßig für ein Fördersystem mit wenigstens einem Speicher, wobei im Speicher die Transferführung ein entlang der Führungen der Zugelemente verfahrbarer Transferumkehrbogen für die dann endlos ausgebildete Flaschenträger-Kette sein kann. Die Zugelemente werden entlang der Führungen in entgegengesetzten Richtungen mit variablen Geschwindigkeiten, vorzugsweise, voneinander unabhängig, angetrieben. Die Kupplungen werden nur durch die Einwirkung des Transferumkehrbogens auf die Flaschenträger-Kette gelöst und eingerückt. Es sind keine anderen mechanischen Hilfsmittel erforderlich. Die Kupplungen arbeiten über lange Standzeiten verschleißfrei und ohne Nachlassen der Kupplungswirkung. Ferner sind sie und ihre Wirkung nicht anfällig gegen Gase, Strahlen oder Flüssigkeiten, die in Flaschenbehandlungsmaschinen oftmals eingesetzt werden.

Bei einer alternativen Ausführungsform des Fördersystems sind zwei oder mehr als zwei Führungen mit je nur einem Zugelement vorgesehen. Zumindest zwei der Zugelemente werden in gleichen Richtungen und z.B. synchron angetrieben, ein weiteres in entgegengesetzte Richtung. Die Transferführung ist entweder eine Weiche zum Spurwechsel der Flaschenträger-Kette zwischen den in gleichen Richtungen angetriebenen Zugelementen in Förderwegen des Fördersystems, oder ein Transferumkehrbogen zum Umlenken der Flaschenträger-Kette zwischen in entgegengesetzten Richtungen und gegebenenfalls mit unterschiedlichen Geschwindigkeiten angetriebenen Zugelementen. Diese Ausführungsform kann mit einem Speicher variabler Kapazität kooperieren, oder ohne Speicher betrieben werden, um Flaschen in unterschiedliche Förderwegen zu verteilen oder sortieren, und zwar ohne die Notwendigkeit, entlang jedes Förderwegs eine durchgehende Flaschenträger-Kette anordnen zu müssen.

Da das Zugelement keine lasttragende Funktion zu erfüllen hat, kann es eine kostengünstige und einfache und leichte Gliederkette sein. Dabei können die Flaschenträger-Kette und die Gliederkette gleiche oder verschiedene Teilungen zwischen den Gliedern bzw. den Flaschenträgern aufweisen. Unterschiedliche Teilungen sind z.B. möglich, da die Zugelemente stets entlang ihrer Führungen laufen, und nur die Flaschenträger-Kette entweder entlang der Führungen oder durch den Transferbereich.

Zweckmäßig sind in der Flaschenträger-Kette aufeinanderfolgende Flaschenträger entweder in einem Schwenkgelenk oder in einem Schwenkschiebegelenk in, vorzugsweise nur zwei, entgegengesetzten Richtungen schwenkbar oder schwenkverschiebbar gekoppelt. Das Schwenkgelenk kann eine zur Antriebsrichtung des Zugelements im Wesentlichen senkrechte Gelenkachse aufweisen, die, zweckmäßig, auch senkrecht zu der Ebene steht, in der die Transferführung liegt. Dadurch stützen sich die Flaschenträger stets stabil aneinander ab, auch wenn sie den Transferbereich durchfahren.

Abhängig von der Art und Weise, wie die Flaschen transportiert werden, das heißt z.B. stehend, liegend, hängend oder dgl., verläuft entlang der gemeinsamen Wegstrecke die Flaschenträger-Kette entweder oberhalb bzw. unterhalb des Zugelements oder seitlich daneben.

Besonders zweckmäßig weist jede Magnetschluss-Kupplung wenigstens einen Permanentmagneten und einen magnetisch vom Permanentmagneten anziehbaren Ankerteil oder zweiten Permanentmagneten mit entgegengesetzter magnetischer Polarisierung jeweils am Zugelement und einem Flaschenträger auf. Entlang des sich mit dem Zugelement in der Wegstrecke überdeckenden Trums der Flaschenträger-Kette liegen viele Kupplungspunkte mit im Wesentlichen gleichen Kupplungskräften in den gegenseitigen Kontaktbereichen vor, so dass die Zugkraft des Zugelementes gleichmäßig verteilt auf die Flaschenträger-Kette übertragen wird.

Die Permanentmagneten bzw. Ankerteile können platten- oder scheibenförmig ausgebildet sein und werden auf Stützflächen angeordnet, die sich entweder außenseitig am Zugelement bzw. dem Flaschenträger befinden, oder versenkt sind, so dass keine Vorsprünge vorliegen.

Günstig ist es, wenn die Relativbewegung, die durch die Transferführung erzwungen wird, in einer durch die Transferführung definierten Ebene liegt, in der der Magnet- und/oder Formschluss jeder Kupplung wirkt oder zu der dieser senkrecht wirkt. Im ersten Fall wird die Kupplung durch eine Klappbewegung gelöst und eingerückt, während im zweiten Fall eine parallele relative Wischbewegung zum Lösen und Einrücken benutzt werden kann.

Die formschlüssige Kupplung ist dadurch unter Nutzen der Relativbewegung selbsttätig und lösbar und einrückbar, dass am Zugelement und dem Flaschenträger ein seitlicher Haken und eine seitliche Hakenaufnahme vorgesehen sind, die in eingerücktem Zustand in Zugrichtung des Zugelements bis zum Mitnahmekontakt zwischen dem Zugelement und dem Flaschenträger ineinandergreifen und einander quer zur Zugrichtung verriegeln. Der Formschluss überträgt die Zugkraft bzw. Antriebsgeschwindigkeit schlupffrei. Die Verriegelung quer zur Zugrichtung führt die Flaschenträger-Kette am Zugelement. Beides, das heißt der Mitnahmekontakt und die Verriegelung werden jeweils selbsttätig gelöst und eingerückt, wenn sich ein Flaschenträger im Transferbereich vom Zugelement löst bzw. diesem nähert. Die Flaschenträger-Kette braucht gegebenenfalls nur unter der Traglast abgestützt zu werden.

Zweckmäßig wird dabei der Haken an einem Glied des als Gliederkette ausgebildeten Zugelements angeordnet. Dieser einen Flaschenträger ziehende und haltende Haken kann gleichzeitig eine Portioniernase für einen in Zugrichtung nachfolgenden Flaschenträger bilden. Somit wird eine mehrfache formschlüssige und kraftschlüssige Abstützung zwischen dem Zugelement und der Flaschenträger-Kette gewährleistet.

Bei der Ausführungsform mit einer Formschluss- und Magnetschluss-Kupplung sind am Zugelement und dem Flaschenträger jeweils quer zur Zugrichtung ineinander fügbare Eingriffs- und Gegeneingriffsglieder vorgesehen, die in eingerücktem Zustand aneinander in Zugrichtung des Zugelements mit Mitnahmekontakt hintergreifen. Der zusätzliche Magnetschluss sichert und entlastet den Mitnahmekontakt. Hierfür sind wenigstens ein Permanentmagnet und ein von diesem magnetisch quer zur Zugrichtung anziehbarer Ankerteil oder ein zweiter Permanentmagnet mit entgegengesetzter magnetischer Polarisierung am Zugelement und am Flaschenträger angebracht. Beim Lösen aufgrund der Relativbewegung werden der Magnetschluss und der Formschluss gelöst, hingegen beim Einrücken im Wesentlichen gleichzeitig hergestellt. Gegebenenfalls wird der Magnetschluss erst gegen Ende der Einrückbewegung hergestellt oder gleich zu Beginn der Lösebewegung aufgehoben.

Zweckmäßig ist zwischen der Kupplung und dem Schwenkgelenk bzw. Schwenkschiebegelenk des Flaschenträgers ein einen Lösehebelarm definierender Abstand vorgesehen. Je größer dieser Abstand bauartbedingt gewählt werden kann, desto geringer ist die Belastung für die Transferführung beim Lösen bzw. Einrücken der Kupplung.

Zweckmäßig ist für jeden Flaschenträger mindestens eine Kupplung vorgesehen. Alternativ könnten für jeden Flaschenträger mehrere Kupplungen vorgesehen werden, falls es sich um in Förderrichtung längere Flaschenträger handelt, oder könnten einige Flaschenträger sogar ohne Kupplung belassen werden.

Baulich einfach weist jeder Flaschenträger wenigstens eine Flaschenstandfläche, vorzugsweise mit wenigstens einem Anschlag für eine Flasche, oder wenigstens einen Flaschengreifer auf, abhängig von der gewünschten Transportart der Flaschen.

Aus Kostengründen ist es zweckmäßig, die Flaschenträger als im Wesentlichen identische Kunststoff-Spitzgussteile auszubilden. Dadurch gestaltet sich die Flaschenträger-Kette kostengünstig und leicht, was im Zusammenspiel mit einer grazilen und leichten Gliederkette als Zugelement trotz hoher Fördergeschwindigkeiten nur relativ geringe Antriebskräfte erfordert.

Das Zugelement wird, vorzugsweise außerhalb des Speichers und/oder im Speicher, durch zumindest einen Fördermotor angetrieben. Dank des Konzepts der Funktionstrennung könnten jedoch entlang des Zugelementes mehrere hintereinander angeordnete Fördermotoren vorgesehen werden, um die Antriebskräfte zu verteilen und die lokalen Spannungen im Zugelement niedrig zu halten. Mehrere Fördermotoren können dann sogar dicht hintereinander angeordnet sein.

In der Führung kann zumindest ein gestellfestes Seitenführungselement des Zugelements gleichzeitig eine lasttragende Abstützung für beispielsweise die Unterseite der Flaschenträger bilden.

Zumindest im Speicher können die Führungen der Zugelemente gekrümmt angeordnet sein. Vorzugsweise folgen sie einer Spiralbahn oder Wendelbahn in einem Speicherturm. Das Zugelement ist als Gliederkette ausgebildet und entweder an der zur Innenseite der Krümmung der Führung weisenden Seite mit Laufrollen in der Führung abgestützt, um den Bewegungswiderstand so niedrig wie möglich zu halten. Hingegen kann das Hochsteigen der Gliederkette unter der Zugkraft an der Bogenaußenseite dadurch verhindert werden, dass Finger der Gliederkette unter ein Führungselement der Führung greifen. Dies sichert einen vibrationsarmen, geräuscharmen und stetigen Lauf der Gliederkette selbst bei hohen Fördergeschwindigkeiten.

Die Zugketten können in einer Variante auch durch eine fortlaufende Reihe von Shuttlen ersetzt werden, welche zwar nicht mehr mechanisch miteinander verbunden sind, aber dennoch im Verbund angesteuert werden. Es ist von Vorteil, nur eine geschwindigkeitsabhängige elektrische Ansteuerung der einlaufenden und der auslaufenden Shuttlen anzuwählen, was dann den Steuerungsaufwand erheblich vereinfacht. Die Kopplung der Trägerkette zu den dann als "Zug-Shuttlen" bezeichneten Shuttlen, ist entweder durch magnetisch oder mechanisch lösbare Verbindungen erreichbar. Auch eine Kombination einer magnetischen oder mechanischen Verbindung, welche wiederlösbar ist, ist denkbar. Im Bereich der Umlenkung ist die Trägerkette ähnlich geführt wie eine herkömmliche Energiekette.

Anhand der Zeichnungen werden Ausführungsformen des Erfindungsgegenstandes erläutert. Es zeigen:
- Fig. 1: in Draufsicht und schematisch einen Ausschnitt eines Fördersystems einer Flaschenbehandlungsmaschine, mit einem Speicher,
- Fig. 2: eine Draufsicht eines Details des Fördersystems,
- Fig. 3: eine Draufsicht eines Details einer anderen Ausführung,
- Fig. 4: einen schematischen Schnitt in Fig. 3 in der Ebene IV-IV,
- Fig. 5: eine Draufsicht einer weiteren Detailvariante,
- Fig. 6: eine Schemadraufsicht einer weiteren Ausführung eines Fördesystems,
- Fig. 7: eine Schemadraufsicht einer weiteren Ausführung eines Fördersystems,
- Fig. 8: einen Schnitt ähnlich Fig. 4 einer weiteren Detailvariante,
- Fig. 9: eine zu der in Fig. 3 dargestellten Ausführungsform alternative Variante,
- Fig. 10: einen Schnitt durch die Ausführungsform gemäß Fig. 9 entlang der Linie X und
- Fig. 11: eine alternative Ausführungsform zu der in Fig. 9 dargestellten Variante.

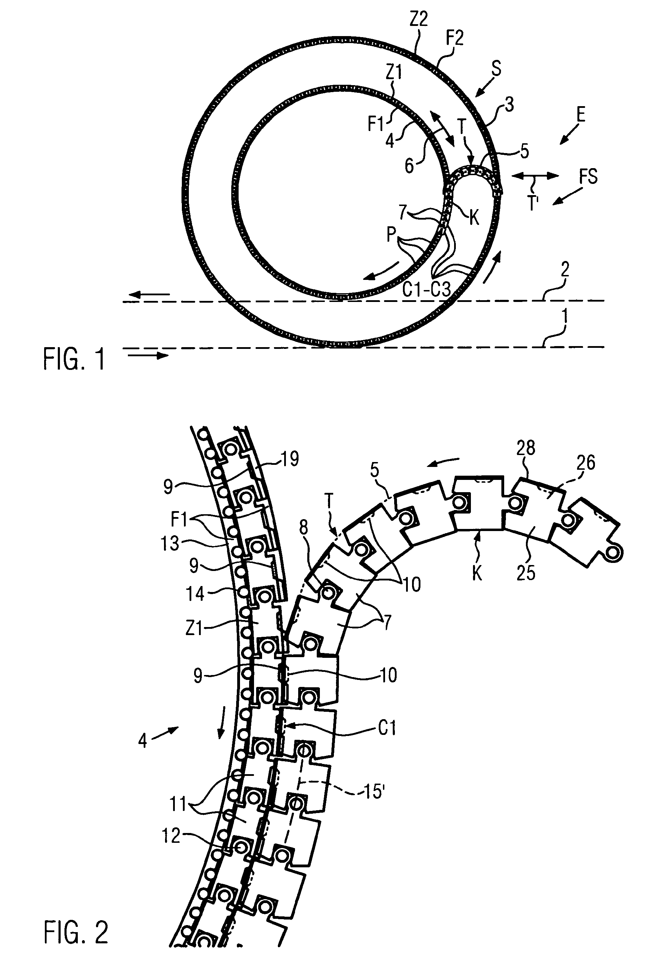

Fig. 1 zeigt einen Ausschnitt eines Fördersystems FS, beispielsweise einer Flaschenbehandlungsmaschine E, wobei sich das Fördersystem FS zwischen nicht gezeigten, Flaschen P liefernden und/oder verarbeitenden Stationen der Flaschenbehandlungs-Maschine E erstreckt. Teil des Fördersystems FS kann gemäß Fig. 1 ein Speicher S sein, der beispielsweise als Speicherturm mit spiralbahnartigen oder doppelwendelförmigen Förderwegen 3, 4 ausgebildet ist. Beispielsweise geradlinig verlaufende Förderwege 1, 2 liefern die Flaschen P an bzw. ab, von denen im Speicher S eine variable Anzahl zwischenspeicherbar ist. Entlang der jeweiligen Förderwege 1, 2, 3, 4 sind Führungen für Zugelemente vorgesehen, beispielsweise Führungen F1, F2 für Zugelemente Z1, Z2 in den Förderwegen 3, 4.

Im Speicher S ist zumindest eine Transferführung T vorgesehen, in der gezeigten Ausführungsform ein annähernd 180° überdeckender Transferumkehrbogen 5, der in Richtung eines Doppelpfeils 6 zwischen den Förderwegen 3, 4 und entlang der Führungen F1, F2 verfahrbar ist, um die Kapazität des Speichers S zu variieren. Die Flaschen P werden mit einer Flaschenträger-Kette K (z.B. einer Endloskettenschlaufe) stehend, hängend, liegend oder auf beliebige Weise transportiert. Die Flaschenträger-Kette K besteht aus kurvengängig miteinander gekoppelten Flaschenträgern 7, trägt die Last, und wird von den Zugelementen Z1, Z2 in bestimmten Wegstrecken geführt und angetrieben.

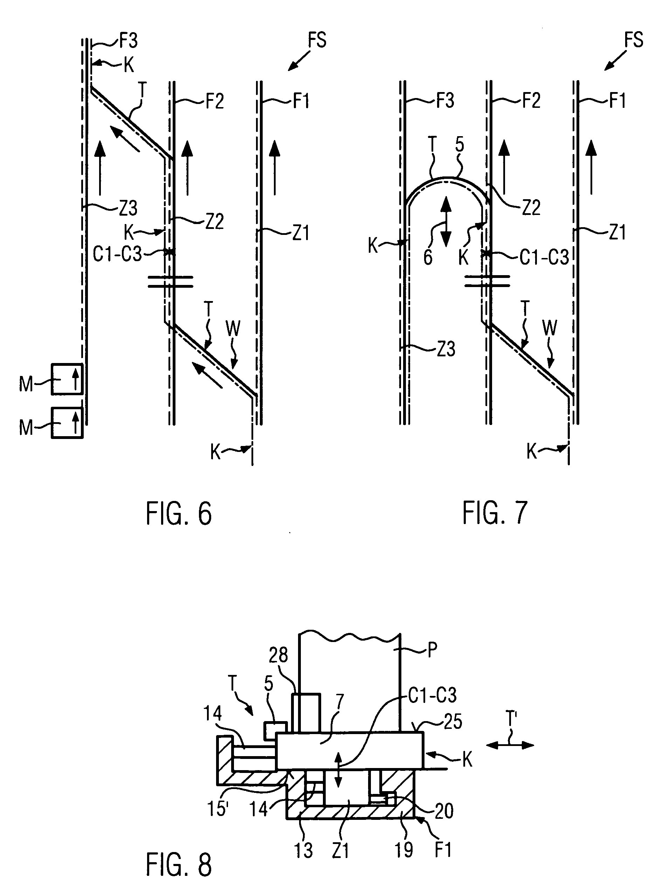

Fig. 2 verdeutlicht einen Transferbereich der Flaschenträger-Kette K zum Förderweg 4. Ein erstes Zugelement Z1 wird in der ersten, einer Krümmung folgenden Führung F1 geführt. Das Zugelement Z1 ist bspw. eine Gliederkette aus kurvengängig miteinander gekoppelten Gliedern 11 mit Schwenkgelenken 12, die zwischen außenseitigen und innenseitigen Führungselementen 13, 19 der Führung F1 läuft, wobei an der Innseite Rollen 14 an den Gliedern 11 oder dem Führungselement 13 und an der Außenseite der Kurvenkrümmung das Führungselement 19 untergreifende Laschen 20 vorgesehen sind, die ein Hochsteigen des Zugelements Z1 unter der Zugkraft verhindern. Das Zugelement Z1 wird beispielsweise durch einen oder mehrere, gegebenenfalls dicht hintereinander platzierte, Fördermotoren M (Fig. 6) des Fördersystems FS im Speicher S oder außerhalb des Speichers S angetrieben. Die Antriebsgeschwindigkeit des Zugelements Z1 ist z.B. variabel. In der zur ersten Führung F1 streckenweise parallelen zweiten Führung F2 wird das zweite Zugelement Z2 geführt, das vom gleichen oder wenigstens einem eigenen Fördermotor (nicht gezeigt) angetrieben sein kann.

Die Führungen F1, F2 verlaufen, vorzugsweise, über eine bestimmte Förderwegstrecke, mit gleichbleibenden Abstand nebeneinander in einer Ebene T', die parallel zu der Ebene der Transferführung T ist (Fig. 1). Die Antriebsgeschwindigkeiten der beiden Zugelemente Z1, Z2 können gleich oder unterschiedlich und variabel sein. Die Transferführung T ist in Richtung des Doppelpfeils 6 entlang der Führungen F1, F2 verschiebbar geführt, wie dies für solche Speicher konventionell ist. Die Bewegungsrichtungen der Zugelemente Z1, Z2 sind hier zueinander entgegengesetzt. Abhängig davon, welche Bewegungsgeschwindigkeit eines von beiden Zugelementen Z1, Z2 die höhere ist, bewegt sich die Transferführung T mit dem jeweils schneller laufenden Zugelement mit einer vom Geschwindigkeitsunterschied abhängigen, relativen Bewegungsgeschwindigkeit mit. Dadurch wird die Kapazität des Speichers vergrößert oder verkleinert, das heißt, es werden entweder mehr Flaschen P im Speicher S zwischengespeichert, als abgenommen werden, oder es können mehr Flaschen P abgenommen werden, als zugeführt werden. Wenn die Bewegungsgeschwindigkeiten der beiden Zugelemente Z1, Z2 nominell gleich sind, verharrt die Transferführung T an Ort und Stelle (Abnahmerate der Flaschen P entspricht der Zulieferrate).

Bei der in Fig. 2 gezeigten Ausführungsform sind die Flaschenträger 7 durch Schwenkgelenke 8 kurvengängig miteinander gekoppelt. Bei einer nicht gezeigten Ausführungsvariante könnten hier Schwenkschiebegelenke vorgesehen sein, die die Kurvengängigkeit gewährleisten. Die Flaschenträger 7 sind bspw. Kunststoff-Spritzgussteile, die oberseitige Flaschen-Standflächen oder Flaschengreifer aufweisen, (nicht gezeigt). Die Glieder 11 der Gliederkette jedes Zugelementes Z1, Z2 können Kunststoff-Spritzgussteile sein, zweckmäßig mit metallischen Armierungen, oder können aus Metall bestehen.

Da die Zugelemente Z1, Z2 nur die Antriebsgeschwindigkeit auf die lasttragende Flaschenträger-Kette K übertragen und diese in Bewegungsrichtung stabilisieren, während die Last anders abgestützt werden kann, können die Zugelemente Z1, Z2 grazile, relativ leichte und einfache Gliederketten sein.

Die Bewegungsgeschwindigkeit des Zugelementes Z1 wird in Fig. 2 auf das Trum der Flaschenträger-Kette K, das über einer bestimmte Wegstrecke im Wesentlichen deckungsgleich mit dem jeweiligen Zugelement Z1, Z2 verläuft, durch gegenseitigen Kontakt (Kraftschluss) und mehrere Kupplungen C1 (in Fig. 2) übertragen. Jede Kupplung C1 (es kann für jeden Flaschenträger 7 mindestens eine Kupplung C1 vorgesehen sein) wirkt bei der gezeigten Ausführungsform, mit einem Magnetschluss zwischen wenigstens einem Permanentmagneten 9 an einem Glied 11 der Gliederkette und einem magnetisch entgegengesetzt polarisierten Permanentmagneten 10, an einem Flaschenträger 7. Es könnte auch nur ein Permanentmagnet 9 oder 10 vorgesehen sein, und die andere magnetisch beaufschlagbare Komponente ein Ankerteil sein. Die Permanentmagneten 9, 10 sind platten- oder scheibenförmig und auf Stützflächen angebracht, die sich an den Außenseiten der Glieder 11 bzw. der Flaschenträger 7 befinden, oder versenkt sind, wie gezeigt, so dass der Permanentmagnet 9, 10 bzw. der Ankerteil nicht vorsteht, sondern bündig abschließt oder gegebenenfalls sogar etwas zurücktritt. Es können die magnetisch zusammenwirkenden Komponenten und/oder die Glieder 11 und die Flaschenhalter 7 einander kontaktieren, um die Flaschenträgerkette K am Zugelement Z1 zu stabilisieren.

Die innenseitigen und außenseitigen Führungselemente 19, 13 für das Zugelement Z1 sind gestellfest angeordnet. Die Oberseite des Führungselements 19 bildet gegebenenfalls eine lastabtragende Abstützung 15' für die Flaschenträger 7. Der Magnetschluss jeder Kupplung C1 wirkt in Fig. 2 in etwa in der Ebene T', in welcher die Transferführung T die Flaschenträger-Kette K zum Zugelement Z1 umlenkt. Dabei führt jeder Flaschenträger 7 eine relative Schwenkbewegung im Schwenkgelenk 8 gegenüber einem Glied 11 in der Ebene T' der Transferführung T aus, durch welche die Kupplung C1 in einem zuklappenden Bewegungsablauf selbsttätig eingerückt wird (Der Lösevorgang vom Zugelement Z2 erfolgt selbsttätig auf umgekehrte Weise).

Die in Fig. 2 als Transferumkehrbogen 5 ausgebildete Transferführung T kann zum Transferieren ein zusätzliches Führungselement z.B. für die obere Außenkante jedes Flaschenträgers 7 aufweisen, das sowohl beim Lösen als auch beim Einrücken der Kupplung C1-C3 und während der Transfer- bzw. Umlenkbewegung wirkt. Die eingerückten Kupplungen C1 übertragen nicht nur die Antriebsgeschwindigkeit, sondern stabilisieren und führen auch die Flaschenträger-Kette K, so dass gegebenenfalls keine eigene Abstützung für die Flaschenträger-Kette K benötigt wird.

In Fig. 2 weist jeder Flaschenträger 7 eine oberseitige Flaschen-Standfläche 25 auf, die durch einen Anschlag oder eine Anschlagfläche 28 ergänzt sein kann. Anstelle einer Standfläche 25 könnte auch ein Flaschengreifer (gestrichelt bei 26 angedeutet) auf dem Flaschenträger 7 vorgesehen sein.

In der Ausführungsform in Fig. 2 werden die Flaschenträger-Kette K und das Zugelement Z1 durch den Magnetschluss sozusagen in stumpfen gegenseitigen Kontakt gebracht. Die Antriebsgeschwindigkeit bzw. Zugkraft wird über den Magnetschluss und gegebenenfalls die Reibung in den Kontaktbereichen übertragen. Die Flaschenträger-Kette K wird am Zugelement Z1 stabilisiert.

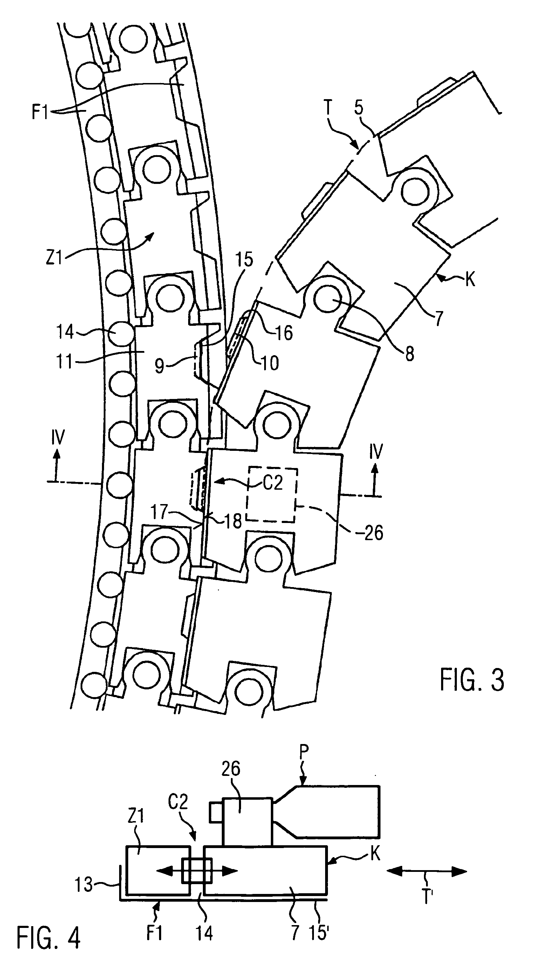

In der Ausführungsform in Fig. 3 sind zwischen den Flaschenträgern 7 und den Gliedern 11 des als Gliederkette ausgebildeten Zugelements Z1 mit Magnetschluss und Formschluss wirkende Kupplungen C2 vorgesehen. Hierbei können relativ schwache Permanentmagneten 9, 10 verwendet werden, da der Formschluss die Antriebsgeschwindigkeit bzw. Zugkraft überträgt und die Stabilisierung der Flaschenträger-Kette K am Zugelement Z1 verstärkt. An den Gliedern 11 und den Flaschenträgern 7 sind jeweils ineinanderpassende Eingriffs- und Gegeneingriffsglieder 15 und 16 vorgesehen, beispielsweise Blöcke 16 mit trapezförmigen Querschnitt oder der Form von Pyramidenstümpfen, und entsprechend negative Vertiefungen 15 in den Gliedern 11. Die Flaschenträger 7 und die Glieder 11 treten entweder nur über die Eingriffs- und Gegeneingriffsglieder 15, 16 in Kontakt, und/oder über ihre aneinanderliegenden Seitenflächen, wobei die Permanentmagneten 9, 10 den Formschluss der Kupplung C2 solange verriegeln, als nicht der Transferumlenkbogen 5 wirksam wird. Jede Kupplung C2 wird unter der Einwirkung des Transferumlenkbogens mit einer Aufklappbewegung um die Schwenkachse 8 gelöst und mit einer Zuklappbewegung um die Schwenkachse 8 des Flaschenträgers 7 eingerückt.

Fig. 4 zeigt in einem schematischen Schnitt in der Ebene IV-IV in Fig. 3, wie die Flaschenträger-Kette K seitlich neben dem Zugelement Z1 an diesem stabilisiert geführt wird, und gegebenenfalls die Traglast auf die Abstützung 15' überträgt. Das Zugelement Z1 ist zwischen den schematisch angedeuteten Führungselementen 13, 14 der Führung F1 nicht nur in der Bewegungsrichtung sondern auch gegen Verdrehen oder einseitiges Hochsteigen abgestützt geführt.

In den Fig. 3 und 4 ist eine liegende Förderung der Flaschen P angedeutet, deren jede über wenigstens einen Flaschengreifer 26 auf dem Flaschenträger 7 gehalten wird. Fig. 4 verdeutlicht auch die Ebene T', in der der Transferumlenkbogen 5 der Transferführung T die Kupplungen C2 löst und einrückt.

Unter der Voraussetzung, dass in den Fig. 3 und 4, beispielsweise an der unterseitigen Abstützung 15' für die Flaschenträger-Kette K eine Seitenführung für die Flaschenträger-Kette K vorgesehen ist, könnte der Magnetschluss der Kupplungen C2 entfallen, so dass die Kupplungen C2 nur mit Formschluss wirken, um die Antriebsgeschwindigkeit bzw. Zugkraft zu übertragen.

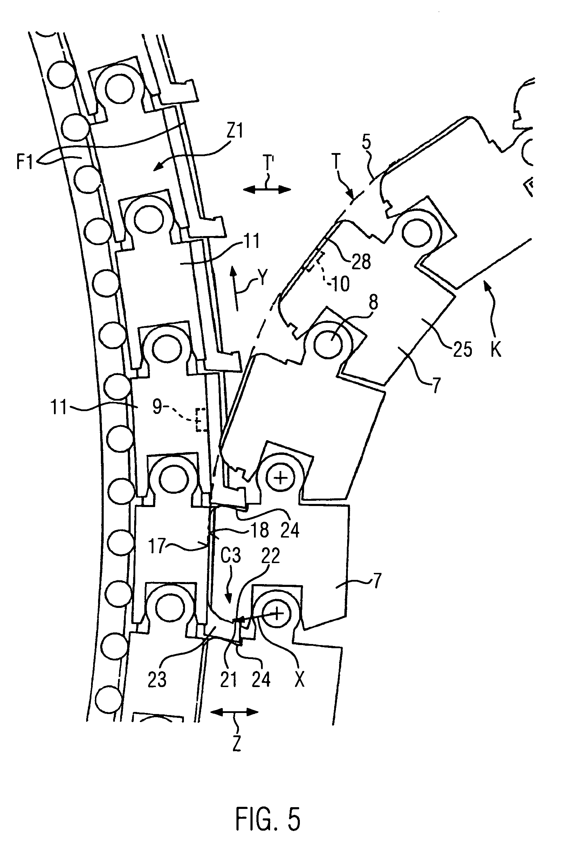

In der Ausführungsform in Fig. 5 sind zwischen den Flaschenträgern 7 und den Gliedern 11 nur mit Formschluss wirksame Kupplungen C3 vorgesehen, um die Antriebsgeschwindigkeit bzw. Zugkraft zu übertragen und die Falschenträger-Kette am Zugelement Z1 zu stabilisieren. Gegebenenfalls führen die formschlüssigen Kupplungen C3 die Flaschenträger-Kette so stabil, dass diese keine gesonderte Abstützung für die Last benötigt.

An einer Seite jedes Gliedes 11 des Zugelements Z1 ist in der hier nach oben angenommenen Laufrichtung Y hintenliegend ein seitlicher Haken 21 an einem seitlichen Ausleger 23 angeformt. Hingegen weist jeder Flaschenträger 7 an seiner zum Zugelement Z1 weisenden Seite, und in Förderrichtung Y hintenliegend, eine zum Haken 21 passende Hakenaufnahme 22 auf, sowie, gegebenenfalls, am in Förderrichtung Y vorneliegenden Ende eine Positionierungsaufnahme 24. In eingerücktem Zustand der Kupplung C3 greift der Haken 21 mit einem Mitnahmekontakt in die Hakenaufnahme 22 in Förderrichtung Y ein, während der Ausleger 23 des im Förderrichtung Y davorliegenden Gliedes 11 in die Positionierungsaufnahme 24 eingreift, und das Glied 11 mit seiner Außenseite 17 an einer Außenseite 18 des Flaschenträgers 7 mit Kontakt anliegen kann. Der Formschluss zwischen dem Haken 21 und der Hakenaufnahme 22 ist von der Schwenkachse 8 jedes Flaschenträgers 7 mit einem Löse- bzw. Einrückhebelarm beabstandet, der durch einen Abstand X definiert ist.

Bei der durch den Transferumlenkbogen 5 erzwungenen Relativbewegung jedes Flaschenträgers 7 gegenüber einem Glied 11 des Zugelementes Z1 wird der Haken 21 aus der Hakenaufnahme 22 gelöst, wobei bereits vorher der Ausleger 23 aus der Positionierungsaufnahme 24 ausgetreten ist, so dass letztendlich die Mitnahmeverbindung in Förderrichtung Y und auch die quer zur Förderrichtung Y und in der Ebene T' wirksame Verriegelung (Doppelpfeil z) nicht mehr wirkt. Die Flaschenträger-Kette K ist vom Zugelement Z1 gelöst und wird von der Transferführung T zum anderen Zugelement überführt. Dort werden die Kupplungen C3 auf umgekehrte Weise wieder selbsttätig eingerückt, das heißt, zunächst greift ein Haken 21 in eine Hakenaufnahme 22 ein, ehe der nächstkommende Ausleger 23 in die Positionierungsaufnahme 24 eingeklinkt wird, und die Seitenflächen 17, 18, gegebenenfalls, einander kontaktieren.

Es würde ausreichen, nur die Haken 21 und Hakenaufnahmen 22 zu verwenden, und die Positionierung über die Aufnahme 24 wegzulassen. Es ist ferner nicht unbedingt erforderlich, dass die Seitenflächen 17, 18 einander stumpf kontaktieren. Ferner könnte der Formschluss, wie gestrichelt angedeutet, durch Magnetschluss unterstützt werden, indem die Permanentmagneten 9, 10 bzw. ein Permanentmagnet und ein magnetisch anziehbarer Ankerteil vorgesehen sind.

Bedeutsam ist in jedem Fall, dass der in Fig. 5 hergestellte Formschluss der jeweiligen Kupplung C3 nicht nur die Antriebsgeschwindigkeit und Zugkraft überträgt, sondern auch die Flaschenträger-Kette K quer zur Förderrichtung Y am Zugelement Z1 stabilisiert.

Fig. 8 verdeutlicht im Übrigen in einem Schnitt ähnlich dem von Fig. 4, dass die Flaschenträger-Kette K nicht unbedingt seitlich neben dem Zugelement Z angeordnet sein muss, wenn die Antriebsgeschwindigkeit bzw. Zugkraft übertragen wird, sondern die Flaschenträger-Kette könnte auch oberhalb des Zugelements Z1 (wie in Fig. 8 angezeigt) angeordnet sein, oder auch unterhalb (nicht gezeigt, z.B. für einen Hängendtransport von Flaschen P).

In der schematisch angedeuteten Ausführungsform in Fig. 8 wird das Zugelement Z1, z.B. eine Gliederkette, analog zu dem gekrümmten Abschnitt in Fig. 2, an der Krümmungsinnenseite über Rollen 14 abgestützt, die an dem Zugelement Z1 oder dem Führungsteil 13 angeordnet sein können, hingegen an der Bogenaußenseite über Finger 20, die einen Führungsteil 19 untergreifen, so dass das Zugelement Z1 unter der Zugwirkung in der Krümmung außenseitig nicht hochsteigen kann. Die Führungsteile 13, 19 des Zugelements Z1 könnten, falls erforderlich, gleichzeitig die Abstützung 15' für die Unterseite ihres Flaschenträgers 7 der Flaschenträger-Kette K bilden, um die Last der Flaschen P aufzunehmen und vom Zugelement Z1 fernzuhalten. Auch die Flaschenträger-Kette kann an der Krümmungsinnenseite an Rollen 14 geführt werden, wobei der Transferumlenkbogen 5 beispielsweise an der Außenseite jedes Flaschenträgers 7 angreift, wenn dieser in den Transferbereich einläuft. Der Flaschenträger 7 besitzt die Flaschenstandfläche 25 und den Anschlag 28 zum Sichern und Positionieren einer darauf stehenden Flasche P.

Falls die in Fig. 8 angedeutete Kupplung C1-C3 nur mit Magnetschluss wirkt, kann der Magnetschluss senkrecht zu der Ebene T' orientiert sein, in der die Transferführung T die Relativbewegung erzwingt. Ist nur ein Formschluss in der jeweiligen Kupplung vorgesehen, muss dieser beispielsweise analog zu den Fig. 4 und 5 entweder in der Ebene T' lösbar und einrückbar sein, oder wie in Fig. 5 durch die relative Schwenkbewegung um die Schwenkachse 8, jeweils mit dem Löse- und Einrückhebelarm des Abstands X.

In den in den Fig. 6 und 7 ausschnittsweise und schematisch angedeuteten Fördersystemen FS sind mindestens zwei nebeneinander verlaufende Führungen F1-F3 vorgesehen, in denen jeweils ein durchgehendes Zugelement Z1-Z3 geführt ist. Die Zugelemente Z1, Z2 werden in der gleichen Richtung angetrieben, beispielsweise synchron oder mit unterschiedlichen Geschwindigkeiten. Die Transferführung T ist als entlang der Führungen F1, F2 bewegbare oder fest installierte Weiche W ausgebildet, um der vom jeweiligen Zugelement Z1 bzw. Z2 angetriebenen Flaschenträger-Kette K, beispielsweise zum Sortieren oder Verteilen von Flaschenströmen, einen Spurwechsel zu ermöglichen. Die Flaschenträger-Kette K ist mit dem jeweiligen Zugelement F1, F2 über die Kupplungen C1-C3 dort gekuppelt, wo sich Trume der Flaschenträger-Kette K mit den Zugelementen Z1, Z2 decken. Die Kupplungen C1-C3 werden durch die von der Transferführung T (Weiche W) erzwungene Relativbewegung zwischen der Flaschenträger-Kette K und dem jeweiligen Zugelement selbsttätig gelöst bzw. eingerückt. Falls die Zugelemente Z1, Z2 unterschiedliche Geschwindigkeiten haben sollten, muss die Weiche W entlang der Führungen F1, F2 bewegbar sein. In Fig. 6 ist eine dritte Führung F1 für ein drittes Zugelement Z3 vorgesehen, das die gleiche Bewegungsrichtung hat wie die Zugelemente Z1, Z2. Eine weitere Transferführung T (Weiche W) ermöglicht das Transferieren der Flaschenträger-Kette K auch zum dritten Zugelement Z3. Fig. 6 verdeutlicht auch zumindest zwei Fördermotoren M, die zum Antrieb mindestens eines, mehrerer oder aller Zugelemente hintereinander, vorzugsweise dicht hintereinander, angeordnet sind.

In der Ausführungsform in Fig. 7 wird das dritte Zugelement Z3 in zur Bewegungsrichtung der ersten und zweiten Zugelemente Z1, Z2 entgegengesetzter Richtung angetrieben. Die nominelle Geschwindigkeit des dritten Zugelements Z3 kann gleich der nominellen Antriebsgeschwindigkeit der anderen Zugelemente Z1 und/oder Z2 sein, oder davon verschieden und/oder variabel. Die Transferführung T ist ein Transferumkehrbogen 5, der die Flaschenträger-Kette K z.B. über 180° umlenkt und, gegebenenfalls, in Richtung des Doppelpfeils 6 verfahrbar ist. Auch in Fig. 7 sind die selbsttätig lösbaren und einrückbaren Kupplungen C1-C3 vorgesehen, um die jeweilige Antriebsgeschwindigkeit und Zugkraft schlupffrei auf die Flaschenträger-Kette K zu übertragen. Im Transferbereich bleiben die Flaschen auf der Flaschenträger-Kette K, während diese die Spur bzw. den Förderweg wechselt. Es ist nur eine Flaschenträger-Kette K (z.B. eine Endloskette) erforderlich, und zu deren Antrieb zwei oder drei oder mehrere einfache Zugelemente Z1 - Z3. Die Zugelemente Z2, Z3 in Fig. 7 könnten Trume eines Endlos-Zugelements sein, z.B. einer endlosen Gliederkette oder eines Zahnriemens.

Die Permanentmagneten 9 und/oder 10 sind zweckmäßig aus Neodym oder anderen seltenen Erden hergestellt, so dass sie bei kleiner Baugröße und geringem Gewicht über lange Standzeiten hohe Leistungsdichte haben.

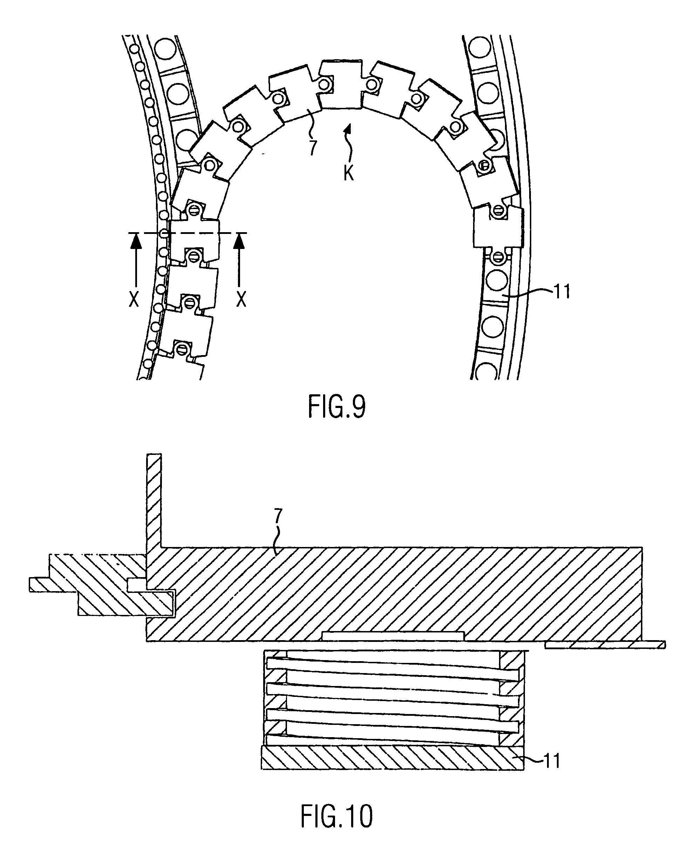

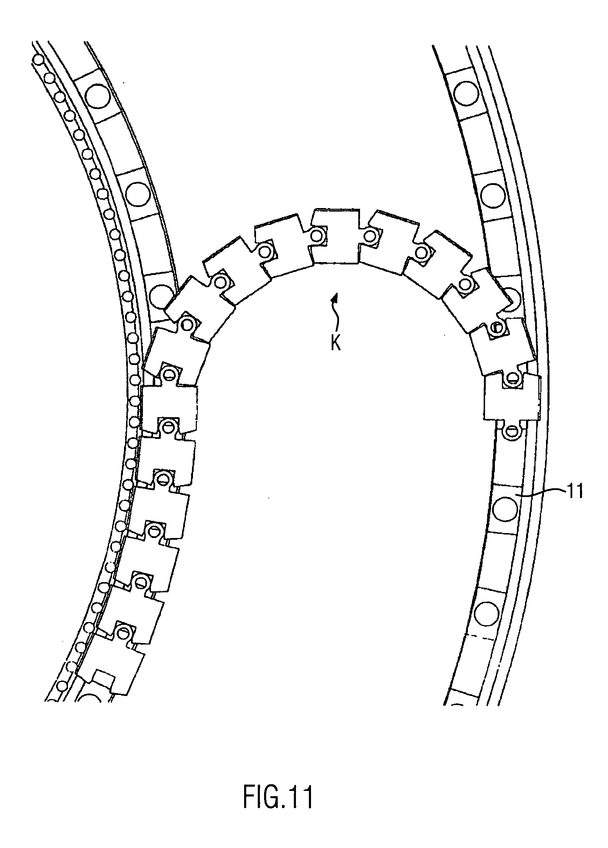

In den Figuren 9 bis 11 sind solch alternative Ausführungsformen dargestellt, die mechanische und/oder magnetische Kopplungen zwischen den als Shuttlen bezeichneten Gliedern 11 und den Flaschenträgern 7 der Flaschenträger-Kette K realisieren.

## Patentansprüche

1. Fördersystem (FS), insbesondere mit wenigstens einem Speicher (S) variabler Kapazität, für eine Flaschen-Behandlungsmaschine (E), wobei wenigstens zwei nebeneinander benachbart verlaufende Führungen (F1-F3) und wenigstens eine Transferführung (T) für eine Flaschenträger-Kette (K) aus kurvengängig gekoppelten Flaschenträgern (7) vorgesehen und die Trume der über die Transferführung (T) von einer Führung zur benachbarten Führung transferierbaren Flaschenträger-Kette (K) entlang der Führungen (F1-F3) antreibbar sind, **dadurch gekennzeichnet, dass** jede Führung (F1-F3) ein durchgehendes, von wenigstens einem Förderantrieb (M) des Fördersystems (FS) antreibbares Zugelement (Z1-Z3) aufweist, und dass ein jeweiliges Trum der Flaschenträger-Kette (K) eine bestimmte Wegstrecke entlang eines Zugelementes (Z1-Z3) von diesem geführt und in Kontakt mit dem Zugelement (Z1-Z3) mittels mehrerer formschlüssiger und/oder magnetschlüssiger, Kupplungen (C1-C3) antreibbar ist, die im Bereich der Transferführung (T) selbsttätig lösbar und einrückbar sind.

2. Fördersystem nach Anspruch 1, **dadurch gekennzeichnet, dass** jede Kupplung (C1-C3) durch eine von der Transferführung (T) erzwungene Relativbewegung zumindest eines Flaschenträgers (7) gegenüber dem antreibenden Zugelement (Z1-Z3) lösbar und einrückbar ist.

3. Fördersystem nach Anspruch 1, **dadurch gekennzeichnet, dass** zumindest im Speicher (S) die Transferführung (T) ein entlang der Führungen (F1-F3) verfahrbarer Transferumkehrbogen (5) für die endlos ausgebildete Flaschenträger-Kette (K) ist, dass die Zugelemente (Z1-Z3) in entgegengesetzten Richtungen mit variablen Geschwindigkeiten, vorzugsweise voneinander unabhängig, entlang der Führungen (F1-F3) antreibbar sind, und dass die Kupplungen (C1-C3) bei der Bewegung der Flaschenträger (7) im Transferumkehrbogen (5) lösbar und einrückbar sind.

4. Fördersystem nach Anspruch 1, **dadurch gekennzeichnet, dass** zwei oder mehr als zwei Führungen (F1-F3) mit je einem Zugelement (Z1-Z3) vorgesehen sind, dass zumindest zwei Zugelemente (Z1, Z2) in gleichen Richtungen und ein weiteres in entgegengesetzter Richtung angetrieben sind, und dass die Transferführung (T) entweder eine Weiche (W) zum Spurwechsel der Flaschenträger-Kette (K) zwischen Zugelementen (Z1, Z2) oder ein Transende ferumkehrbogen (5) zum Umlenken der Flaschenträger-Kette (K) zwischen, gegebenenfalls mit unterschiedlichen Geschwindigkeiten, angetriebenen Zugelementen (Z2, Z3) ist.

5. Fördersystem nach wenigstens einem der vorhergehenden Ansprüche, **dadurch gekennzeichnet, dass** das Zugelement (Z1-Z3) eine Gliederkette mit Gliedern (11) ist, und dass, vorzugsweise, die Flaschenträger-Kette (K) und die Gliederkette gleiche oder verschiedene Teilungen aufweisen.

6. Fördersystem nach Anspruch 1, **dadurch gekennzeichnet, dass** aufeinanderfolgende Flaschenträger (7) in einem Schwenkgelenk (8) oder Schwenkschiebegelenk mit zur Antriebsrichtung des Zugelements (Z1, Z2) im Wesentlichen senkrechter Gelenkachse in zwei entgegengesetzten Richtungen schwenkbar oder schwenkverschiebbar gekoppelt sind.

7. Fördersystem nach Anspruch 1, **dadurch gekennzeichnet, dass** in der Wegstrecke die Flaschenträger-Kette (K) entweder oberhalb bzw. unterhalb des Zugelements (Z1-Z3) oder seitlich neben dem Zugelement (Z1-Z3) angeordnet ist.

8. Fördersystem nach Anspruch 1, **dadurch gekennzeichnet, dass** jede Magnetschluss-Kupplung (C1) wenigstens einen Permanentmagneten (9, 10) und einen vom Permanentmagneten (9, 10) anziehbaren Ankerteil oder zweiten Permanentmagneten mit entgegengesetzter magnetischer Polarisierung am Zugelement (Z1-Z3) und einem Flaschenträger (7) aufweist, und dass das Zugelement (Z1-Z3) und die Flaschenträger-Kette (K) oder/und die Permanentmagneten (9, 10) oder ein Permanentmagnet (9 oder 10) und ein Ankerteil unter der Magnetschlusskraft in Kontakt bringbar sind.

9. Fördersystem nach Anspruch 8, **dadurch gekennzeichnet, dass** die Permanentmagneten (9, 10) bzw. Ankerteile platten- oder scheibenförmig ausgebildet und an außenseitigen oder versenkten Stützflächen des Zugelements (Z1-Z3) bzw. der Flaschenträger (7) angeordnet sind.

10. Fördersystem nach Anspruch 2, **dadurch gekennzeichnet, dass** die Relativbewegung in einer durch die Transferführung (T) definierten Ebene (T') abläuft, und dass der Magnetschluss und/oder Formschluss der Kupplung (C1-C3) im Wesentlichen entweder in und/oder senkrecht zu der Ebene (T') orientiert ist (sind).

11. Fördersystem nach Anspruch 1, **dadurch gekennzeichnet, dass** die formschlüssige Kupplung (C3) am Zugelement (Z1-Z3) und dem Flaschenträger (7) einen seitlichen Haken (21) und eine seitliche Hakenaufnahme (22) aufweist, die im eingerückten Zustand in Zugrichtung des Zugelements (Z1-Z3) bis zum Kontakt zwischen dem Zugelement (Z1-Z3) und dem Flaschenträger (7) ineinandergreifen und gleichzeitig einander quer zur Zugrichtung verriegeln.

12. Fördersystem nach Anspruch 11. **dadurch gekennzeichnet, dass** der Haken (21) an einem Glied (11) des als Gliederkette ausgebildeten Zugelements (Z1-Z3) angeordnet ist, und dass der Haken (21) gleichzeitig eine Positioniernase (23) für einen in Zugrichtung nachfolgenden Flaschenträger (7) bildet.

13. Fördersystem nach Anspruch 1. **dadurch gekennzeichnet, dass** die formschlüssige und magnetschlüssige Kupplung (C2) quer zur Zugrichtung ineinanderfügbare Eingriffs- und Gegeneingriffsglieder (15, 16) am Zugelement (Z1-Z3) und dem Flaschenträger (7) aufweist, die in eingerücktem Zustand einander in Zugrichtung des Zugelements (Z1-Z3) mit Mitnahmekontakt hintergreifen, und dass zusätzlich wenigstens ein Permanentmagnet (9, 10) und ein von diesem magnetisch anziehbarer Ankerteil oder ein zweiter Permanentmagnet mit entgegengesetzter magnetischer Polarisierung am Zugelement (Z1-Z3) und am Flaschenträger (7) angebracht sind.

14. Fördersystem nach Anspruch 1, **dadurch gekennzeichnet, dass** zwischen der Kupplung (C1-C3) und dem Schwenkgelenk (8) bzw. Schwenkschiebegelenk der Flaschenträger (7) ein einen mit Löschhebelarm definierender Abstand (X) vorgesehen ist.

15. Fördersystem nach Anspruch 1, **dadurch gekennzeichnet, dass** für jeden Flaschenträger (7) mindestens eine Kupplung (C1-C3) vorgesehen ist.

16. Fördersystem nach Anspruch 1, **dadurch gekennzeichnet, dass** der Flaschenträger (7) wenigstens eine Flaschenstandfläche (25), vorzugsweise mit einem außenseitigen Anschlag (27), oder wenigstens einen Flaschengreifer (26) aufweist.

17. Fördersystem nach Anspruch 1, **dadurch gekennzeichnet, dass** die Flaschenträger (7) zumindest im Wesentlichen identische Kunststoff-Spritzgussteile sind.

18. Fördersystem nach Anspruch 1, **dadurch gekennzeichnet, dass** das Zugelement (Z1-Z3), vorzugsweise außerhalb des Speichers (S), entweder durch einen Fördermotor (M) oder gleichzeitig durch mehrere, vorzugsweise dicht hintereinander angeordnete, Fördermotoren (M), antreibbar ist.

19. Fördersystem nach Anspruch 3, **dadurch gekennzeichnet, dass** zumindest im Speicher (S) die Führungen (F1, F2) der Zugelemente (Z1, Z2) gekrümmt, vorzugsweise einer Spiralbahn oder Förderwegewendel eines Speicherturms folgend, angeordnet sind, und dass das als Gliederkette ausgebildete Zugelement (Z1, Z2) an der Krümmungs-Innenseite an Laufrollen (14) und an der Krümmungs-Außenseite durch unter ein Führungselement (19) der Führung (F1, F2) greifende Finger (20) der Gliederkette gegen Aufsteigen abstützbar ist.

## Claims

1. Conveyor system (FS), in particular with at least one variable capacity storage (S) for a bottle treatment machine (E), where at least two guides (F1-F3) running laterally adjacent and at least one transfer guide (T) are provided for a bottle carrier chain (K) of curve-going coupled bottle carriers (7), and the runs of said bottle carrier chain (K) being transferable from one guide to the adjacent guide via said transfer guide (T) are drivable along the guides (F1-F3),
**characterized in that**
each guide (F1-F3) comprises a continuous tension member (Z1-Z3) drivable by at least one conveyor drive (M) of said conveyor system (FS), and **in that** a respective run of said bottle carrier chain (K) along a certain distance of a tension member (Z1-Z3) is guided by it and is drivable in contact with said tension member (Z1-Z3) by means of multiple positive-fit and/or magnetically engaging couplings (C1-C3), which in the area of said transfer guide (T) are automatically releasable and engageable.

2. Conveyor system according to claim 1, **characterized in that** each coupling (C1-C3) is releasable and engageable by a relative movement of at least one bottle carrier (7) relative to said driving tension member (Z1-Z3) forced by said transfer guide (T).

3. Conveyor system according to claim 1, **characterized in that** at least in said storage (S), said transfer guide (T) is a transfer return bend (5), disposed movably along said guides (F1-F3), for said bottle carrier chain (K) formed in an endless manner, **in that** said tension members (Z1-Z3) are drivable along said guides (F1-F3) in opposite directions at variable speeds, preferably, independently of each other, and **in that** said couplings (C1-C3) are automatically releasable and engageable during the movement of said bottle carries (7) in said transfer return bend (5).

4. Conveyor system according to claim 1, **characterized in that** two or more than two guides (F1-F3) are provided, each comprising one tension member (Z1-Z3), **in that** at least two tension members (Z1, Z2) are driven in the same directions and another one in the opposite direction, and **in that** said transfer guide (T) is either a switch (W) for changing paths of said bottle carrier chain (K) between said tension members (Z1, Z2) or a transfer return bend (5) for deflecting said bottle carrier chain (K) between tension members (Z2, Z3) possibly driven at different speeds.

5. Conveyor system according to at least one of the preceding claims, **characterized in that** said tension member (Z1-Z3) is a link chain with links (11), and **in that** said bottle carrier chain (K) and said link chain preferably comprise identical or different partitions.

6. Conveyor system according to claim 1, **characterized in that** consecutive bottle carriers (7) are coupled to each other in a pivot joint (8) or in a pivot/slide joint having a joint axis being essentially perpendicular to the drive direction of said tension member (Z1, Z2) in pivotable or pivotable/slideable manner in preferably two opposite directions.

7. Conveyor system according to claim 1, **characterized in that** in the path, said bottle carrier chain (K) is guided either above or below said tension member (Z1-Z3), respectively, or laterally adjacent to said tension member (Z1-Z3).

8. Conveyor system according to claim 1, **characterized in that** each magnetic engagement coupling (C1) comprises at least one permanent magnet (9, 10) and one armature element or a second permanent magnet with opposite magnetic polarization at said tension member, being magnetically attractable by said permanent magnet, and a bottle carrier (7), and **in that** said tension member (Z1-Z3) and said bottle carrier chain (K) or/and said permanent magnets (9, 10) or a permanent magnet (9 or 10) and an armature element can be brought into contact by the magnet engagement force.

9. Conveyor system according to claim 8, **characterized in that** said permanent magnets (9, 10) or armature elements, respectively, are formed plate-like or disc-shaped and are arranged at outside or sunk-in support surfaces of said tension member (Z1-Z3) or said bottle carriers (7), respectively.

10. Conveyor system according to claim 2, **characterized in that** the relative movement occurs in a plane (T') being defined by said transfer guide (T) and **in that** magnetic engagement and/or positive fit of said coupling (C1-C3) is (are) essentially oriented either in and/or perpendicular to said plane (T').

11. Conveyor system according to claim 1, **characterized in that** said positive-fitting coupling (C3) at said tension member (Z1-Z3) and said bottle carrier (7) comprise a lateral hook (21) and lateral hook receptacle (22), which in the engaged state engage in the direction of tension of said tension member (Z1-Z3) up to the contact between said tension member (Z1-Z3) and aid bottle carrier (7) and interlock with each other transverse to the direction of tension.

12. Conveyor system according to claim 11, **characterized in that** said hook (21) is arranged at a link (11) of said tension member (11) formed as a link chain and **in that** said hook (21) simultaneously forms a positioning nose (23) for a bottle carrier (7) following in the direction of tension.

13. Conveyor system according to claim 1, **characterized in that** said positive fit and magnetically engaging coupling (C2) comprises engagement and counter-engagement elements (15, 16) provided joinably engageable laterally to the direction of tension at said tension member (Z1-Z3) and said bottle carrier (7), which in the engaged state engage in the direction of tension of said tension member (Z1-Z3) with driving contact, and **in that** additionally at least one permanent magnet (9, 10) and an armature element or a second permanent magnet with opposite magnetic polarization, being magnetically attractable by it, are mounted at said tension member (Z1-Z3) and at said bottle carrier (7).

14. Conveyor system according to claim 1 **characterized in that** between said coupling (C1-C3) and said pivot joint (8) and/or said pivot/slide joint of said bottle carriers (7) a distance (X) being defined by a release lever is provided.

15. Conveyor system according to claim 1, **characterized in that** each bottle carrier (7) is provided with at least one coupling (C1-C3).

16. Conveyor system according to claim 1, **characterized in that** said bottle carrier (7) comprises at least one bottle platform (25) preferably with at least one outside stop (27) or at least one bottle gripper (26).

17. Conveyor system according to claim 1, **characterized in that** said bottle carriers (7) are at least essentially identical injection-molded plastic elements.

18. Conveyor system according to claim 1, **characterized in that** said tension member (Z1-Z3) is drivable preferably outside of said storage (S) either by one conveyor motor (M) or simultaneously by several conveyor motors (M) preferably being arranged closely consecutive.

19. Conveyor system according to claim 3, **characterized in that** at least in said storage (S), said guides (F1, F2) of said tension members (Z1, Z2) are arranged in a curved manner, preferably following a spiral path or conveyor path helix, and **in that** said tension member (Z1, Z2) formed as a link chain is prevented from ascending on the inside of said curve on rollers (14) and on the outside by fingers (20) of said link chain reaching under a guide member (19) of said guide (F1, F2).

## Revendications

1. Convoyeur (FS), en particulier avec au moins un réservoir (S) de capacité variable, pour une machine de traitement de bouteilles (E), étant précisé qu'il est prévu au moins deux guides (F1-F3) voisins s'étendant côte à côte, et au moins un guide de transfert (T) pour une chaîne de supports de bouteilles (K) formée de supports de bouteilles (7) couplés suivant une forme courbe, et que les brins de la chaîne de supports de bouteilles (K) apte à être transférée d'un guide au guide voisin par l'intermédiaire du guide de transfert (T) sont aptes à être entraînés le long des guides (F1-F3), **caractérisé en ce que** chaque guide (F1-F3) comporte un élément de traction (Z1-Z3) continu apte à être entraîné par au moins un entraînement (M) du convoyeur (FS), et **en ce qu'**un brin de la chaîne de supports de bouteilles (K) est guidé sur une distance définie, le long d'un élément de traction (Z1-Z3), par celui-ci et est apte à être entraîné en étant en contact avec l'élément de traction (Z1-Z3) à l'aide de plusieurs accouplements (C1-C3) par complémentarité de forme et/ou magnétiques qui sont aptes à être desserrés et enclenchés automatiquement dans la zone du guide de transfert (T).

2. Convoyeur selon la revendication 1, **caractérisé en ce que** chaque accouplement (C1-C3) est apte à être desserré et enclenché grâce à un mouvement relatif d'au moins un support de bouteille (7), provoqué par le guide de transfert (T), par rapport à l'élément de traction d'entraînement (Z1-Z3).

3. Convoyeur selon la revendication 1, **caractérisé en ce qu'**au moins dans le réservoir (S), le guide de transfert (T) est constitué par une courbe de transfert inverseuse (5), mobile le long des guides (F1-F3), pour la chaîne de supports de bouteilles (K) sans fin, **en ce que** les éléments de traction (Z1-Z3) sont aptes à être entraînés le long des guides (F1-F3) dans des directions opposées à des vitesses variables, de préférence indépendamment les uns des autres, et **en ce que** les accouplements (C1-C3) sont aptes à être desserrés et enclenchés lors du mouvement des supports de bouteilles (7) dans la courbe de transfert inverseuse (5).

4. Convoyeur selon la revendication 1, **caractérisé en ce qu'**il est prévu deux ou plus de deux guides (F1-F3) avec un élément de traction (Z1-Z3) chacun, **en ce qu'**au moins deux éléments de traction (Z1, Z2) sont entraînés dans des directions identiques tandis qu'un autre est entraîné dans une direction opposée, et **en ce que** le guide de transfert (T) est constitué soit par une aiguille (W) pour faire passer la chaîne de supports de bouteilles (K) d'un élément de traction (Z1, Z2) à l'autre, soit par une courbe de transfert inverseuse (5) pour dévier la chaîne de supports de bouteilles (K) entre des éléments de traction (Z2, Z3) entraînés éventuellement à des vitesses différentes.

5. Convoyeur selon l'une au moins des revendications précédentes, **caractérisé en ce que** l'élément de traction (Z1-Z3) est constitué par une chaîne à maillons avec des maillons (11), et **en ce que**, de préférence, la chaîne de supports de bouteilles (K) et la chaîne à maillons présentent des pas égaux ou différents.

6. Convoyeur selon la revendication 1, **caractérisé en ce que** les supports de bouteilles (7) successifs sont accouplés de manière à pouvoir pivoter ou coulisser et pivoter dans deux sens opposés, dans une articulation pivotante (8) ou une articulation pivotante et coulissante avec un axe de pivotement globalement perpendiculaire au sens d'entraînement de l'élément de traction (Z1, Z2).

7. Convoyeur selon la revendication 1, **caractérisé en ce que** sur la trajectoire, la chaîne de supports de bouteilles (K) est disposée au-dessus ou au-dessous de l'élément de traction (Z1-Z3), ou sur le côté près de l'élément de traction (Z1-Z3).

8. Convoyeur selon la revendication 1, **caractérisé en ce que** chaque accouplement magnétique (C1) comporte au moins un aimant permanent (9, 10) et une partie formant induit ou un second aimant permanent apte à être attiré(e) par l'aimant permanent (9, 10) et de polarisation magnétique opposée, sur l'élément de traction (Z1-Z3) et sur un support de bouteilles (7), et **en ce que** l'élément de traction (Z1-Z3) et la chaîne de supports de bouteilles (K) ou/et les aimants permanents (9, 10) ou un aimant permanent (9 ou 10) et une partie formant induit sont aptes à être mis en contact grâce à la force d'accouplement magnétique.

9. Convoyeur selon la revendication 8, **caractérisé en ce que** les aimants permanents (9, 10) ou les parties formant induits ont la forme de plaques ou de disques et sont disposés sur des surfaces d'appui extérieures ou encastrées de l'élément de traction (Z1-Z3) ou des supports de bouteilles (7).

10. Convoyeur selon la revendication 2, **caractérisé en ce que** le mouvement relatif se déroule dans un plan (T') défini par le guide de transfert (T) et **en ce que** l'accouplement magnétique et/ou par complémentarité de forme (C1-C3) est (sont) orienté(s) globalement dans le plan (T') et/ou perpendiculairement à celui-ci.

11. Convoyeur selon la revendication 1, **caractérisé en ce que** l'accouplement par complémentarité de forme (C3) comporte sur l'élément de traction (Z1-Z3) et le support de bouteilles (7) un crochet latéral (21) et un logement de crochet latéral (22) qui, en position enclenchée, s'emboîtent dans le sens de traction de l'élément de traction (Z1-Z3) jusqu'au contact entre ledit élément de traction (Z1-Z3) et le support de bouteilles (7) et se verrouillent en même temps mutuellement transversalement par rapport au sens de traction.

12. Convoyeur selon la revendication 11, **caractérisé en ce que** le crochet (21) est disposé sur un maillon (11) de l'élément de traction (Z1-Z3) conçu comme une chaîne à maillons, et **en ce que** le crochet (21) forme en même temps une saillie de positionnement (23) pour un support de bouteille (7) suivant, dans le sens de traction.

13. Convoyeur selon la revendication 1, **caractérisé en ce que** l'accouplement par complémentarité de forme et magnétique (C2) comporte sur l'élément de traction (Z1-Z3) et le support de bouteille (7) un élément d'emboîtement et un élément opposé (15, 16) qui sont aptes à s'emboîter transversalement par rapport au sens de traction et qui, en position enclenchée, viennent s'emboîter l'un derrière l'autre, avec un contact d'entraînement, dans le sens de traction de l'élément de traction (Z1-Z3), et **en ce qu'**au moins un aimant permanent (9, 10) et une partie formant induit apte à être entraînée magnétiquement par celui-ci ou un second aimant permanent à polarisation magnétique opposée sont disposés en supplément sur l'élément de traction (Z1-Z3) et sur le support de bouteilles (7).

14. Convoyeur selon la revendication 1, **caractérisé en ce qu'**il est prévu entre l'accouplement (C1-C3) et l'articulation pivotante (8) ou l'articulation pivotante et coulissante des supports de bouteilles (7), un écartement (X) qui définit un bras de levier de desserrage.

15. Convoyeur selon la revendication 1, **caractérisé en ce qu'**il est prévu pour chaque support de bouteille (7) au moins un accouplement (C1-C3).

16. Convoyeur selon la revendication 1, **caractérisé en ce que** le support de bouteille (7) comporte au moins une surface (25) pour poser la bouteille, de préférence avec une butée extérieure (28), ou au moins un organe de préhension de bouteille (26).

17. Convoyeur selon la revendication 1, **caractérisé en ce que** les supports de bouteilles (7) sont constitués par des pièces moulées par injection en matière plastique qui sont au moins globalement identiques.

18. Convoyeur selon la revendication 1, **caractérisé en ce que** l'élément de traction (Z1-Z3) est apte à être entraîné de préférence à l'extérieur du réservoir (S), soit par un moteur de convoyeur (M), soit simultanément par plusieurs moteurs de convoyeur (M) disposés de préférence tout près les uns derrière les autres.

19. Convoyeur selon la revendication 3, **caractérisé en ce qu'**au moins dans le réservoir (S), les guides (F1, F2) des éléments de traction (Z1, Z2) sont disposés de manière courbe, de préférence suivant une trajectoire en spirale ou une hélice d'acheminement d'un brin de réservoir, et **en ce que** l'élément de traction (Z1, Z2) conçu comme une chaîne à maillons est apte à être supporté à l'encontre d'un soulèvement sur le côté intérieur de la courbe contre des galets (14), et sur le côté extérieur de la courbe par des doigts (20) de la chaîne à maillons qui viennent en prise sous un élément de guidage (19) du guide (F1, F2).
